# EUROPEAN PATENT SPECIFICATION

(11) **EP 0 877 194 B1**
(45) Date of publication and mention of the grant of the patent: **28.07.2004**
(21) Application number: 98303649.2
(22) Date of filing: 08.05.1998
(51) Int. Cl.: F16L 55/165

(54) **Conduit lining**
Auskleidung von Leitungen
Revêtement de tuyaux

(30) Priority: 09.05.1997 GB 9709503
(43) Date of publication of application: 11.11.1998
(73) Proprietor: Evolved Processes Limited, Marlborough, Wiltshire SN8 1HQ (GB)
(72) Inventor: Poole, Anthony George, Fordingbridge, Hampshire SP6 2PT (GB)
(74) Representative: Evans, Claire

(56) References cited:
- WO-A-95/10006
- US-A- 4 810 453

## Description

When conduits such as gas and water pipes start to leak or require improvement, it is often preferred to line the conduit rather than undertake repair or replacement. A tubular liner is inserted into the conduit in a collapsed state and when the lining has reached the desired position along the length of the conduit, it is expanded into contact with the bore of the conduit to both protect the walls of the conduit and the transported liquids and gases and prevent passage of liquids and gases through the conduit walls and joints.

The expansion of the lining presents few problems, but the restricted access to the conduit and the restricted volume and its convoluted path often make the positioning of the lining within the conduit before expansion very difficult. The lining has to travel down the conduit which may have a rough or even broken floor, and if the lining becomes damaged, it will not serve the purpose of making the conduit leak proof.

The present invention aims to overcome such problems by providing a method of inserting a flexible tubular liner into a conduit comprising flattening the liner and folding the flattened liner firstly into a plurality of longitudinal strips and folding the liner secondly into upper and lower portions, placing the fold adjacent the mouth of the conduit with the portions extending away therefrom, the strips of the lower portion forming a channel for guiding the upper portion and moving the fold along the liner to increase the length of the lower portion and decrease the length of the upper portion so that the upper portion is drawn into the conduit by sliding in said channel. As the fold moves down the length of the liner, it moves into the conduit. The lower portion will roll onto the floor of the conduit without any relative motion longitudinally with respect to the conduit and the upper portion will be enclosed within the channel formed by the longitudinal fold of the lower portion and so will be protected from contact with the walls of the conduit as the transverse fold is drawn into the conduit and the upper portion slides within the channel of the lower portion into the conduit. All motion longitudinally of the conduit by the liner will have been separated from the conduit by the lower portion of the lining which itself is stationary relative to the conduit and so the danger of damage to the lining is much reduced.

When the complete length of lining has been introduced into the conduit in this way so that the fold region reaches the other end of the liner, the lining can be unfolded about its longitudinal fold line or lines and expanded and possibly cured in the conventional manner.

The fold of the liner is preferably made over a member extending transversely of the conduit. The member can then be drawn into the conduit with lining extending from the lower portion over the member to the upper portion. The liner rolls over the member as a given point on the lining moves from the upper portion to the lower and the fold moves further into the conduit. Any tendency of the liner to twist as it is drawn into the conduit can be prevented by weighting the member as it is drawn into the conduit.

An example of a conduit lining method according to the invention is illustrated in the accompanying drawings in which
Figure 1 is a diagram of a circular liner compressed flat and folded longitudinally,
Figure 2 is a diagram of the folded liner of Figure 1 located adjacent the mouth of a conduit to be lined, with the portions of the liner extending from the transverse fold extending outwards from the conduit, and
Figure 3 is a diagram of the liner of Figure 2 in which the fold region has been moved into the conduit without movement of the outer region of the folded liner of Figure 2 relative to the floor of the conduit.

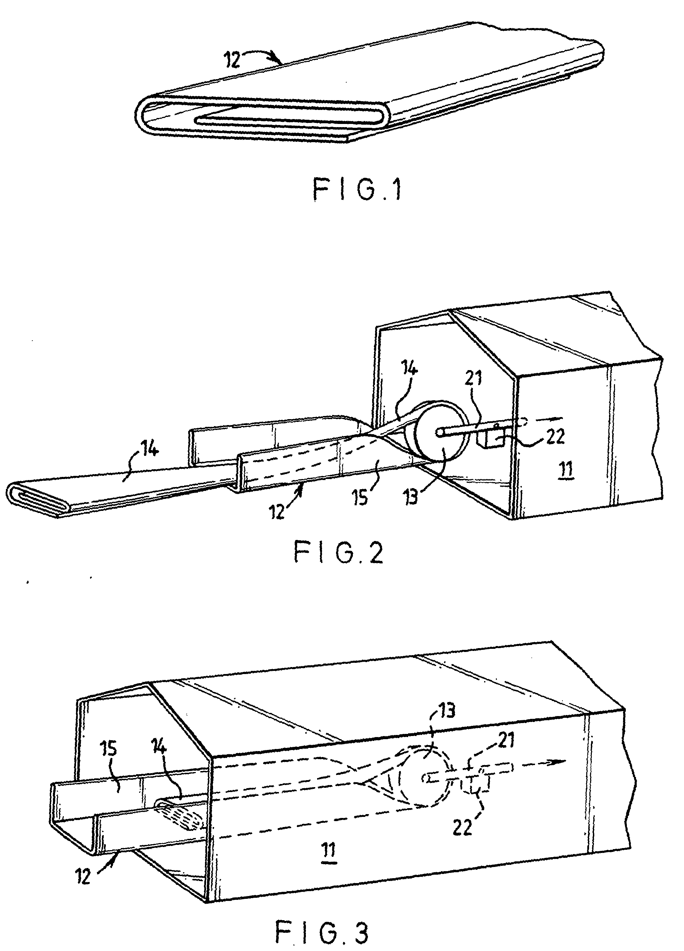

When a given length of conduit 11 is to be lined a length of liner 12 of that given length or slightly greater is brought to one end of the given length of conduit, already flattened and folded twice longitudinally to form a general channel shape in which the three portions defining the folds are mutually parallel (see Fig. 1). The length of liner extends away from the given length of conduit with the channel opening downwards (see Fig. 2). The end of the liner adjacent the given length of conduit is folded over a roller 13, by passing over the roller around its side facing into the conduit and then back below the roller. The short folded-over length 15 of liner thus forms an upwardly opening channel which is then opened to receive the upper main length 14 of liner. The roller 13 is mounted on a shaft supported at its ends in bearings in a frame which can be drawn into the conduit.

To draw the liner into the conduit, the short folded-over length 15 is anchored and the roller 13 in its frame is drawn into the conduit. The main length of liner 14 thus slides within the protective channel formed by the folded-over length 15 as it rolls over the roller 13 to add to the folded-over length. The additions to the folded-over length simply roll down onto the floor of the conduit without any longitudinal relative movement. When the roller has travelled to the other end of the given length the whole length of liner will have rolled over the roller onto the floor of the conduit after sliding through the channel formed by the portion 15. It can then be unfolded about its longitudinal folds and expanded into contact with the inner walls of the conduit, followed by curing if desired.

Figure 3 shows a draw-bar 21 attached to the shaft of the roller 13. The bar 21 is drawn into the conduit by a suitable winch (not shown) at the other end of the given length of conduit. A weight 22 is attached to the bar 21 to reduce any tendency of the folded liner to twist the roller 13 from its horizontal axis.

In place of the roller 13, a fixed member may be provided when the liner is of such material that it will easily slide over the fixed member to form the transverse fold.

As the roller or fixed member moves into the conduit, the portion of the liner on the floor of the conduit nearest the roller or fixed member will have to open up from its folded down state in order to provide protection for the portion of the liner moving into the conduit over the roller or fixed member. Guides fixed to the mounting of the roller or to the fixed member may engage the sides of the channel formed by the liner lying on the floor of the conduit to ensure that the open channel extends close enough to the roller/fixed member to provide full protection for the upper run of the liner.

Although a pair of longitudinal folds to provide the channel is preferable, a fair measure of protection is afforded by a single fold, the channel then being a squashed C-shape with the upper portion resting on the lower arm of the C of the lower portion.

## Claims

1. A method of inserting a flexible tubular liner into a conduit comprising flattening the liner and folding the flattened liner firstly into a plurality of longitudinal strips and folding the liner secondly into upper and lower portions, placing the fold adjacent the mouth of the conduit with the portions extending away therefrom, the strips of the lower portion forming a channel for guiding the upper portion and moving the fold along the liner to increase the length of the lower portion and decrease the length of the upper portion so that the upper portion is drawn into the conduit by sliding in said channel.

2. A method as claimed in claim 1 wherein the liner is folded into three longitudinal strips which form said channel which comprises a base and two side portions.

3. A method as claimed in claim 2 wherein the strips of the upper portion are arranged generally mutually parallel in a transverse section of the liner.

4. A method as claimed in any one of claims 1 to 3 wherein the folding of the liner into upper and lower portions is arranged around a roller mounted for rotation about bearings which are moved into the conduit to move the fold into the conduit.

5. A method as claimed in any one of the preceding claims comprising moving the fold into the conduit until the length of the upper portion reduces to zero and expanding the liner into contact with the walls of the conduit to form a lining therefor.

## Patentansprüche

1. Verfahren zum Einsetzen einer flexiblen rohrförmigen Auskleidung in ein Rohr umfassend: Flachlegen der Auskleidung und Falten der flachgelegten Auskleidung als erstes in mehrere Längsstreifen und Falten der Auskleidung als zweites in obere und untere Abschnitte, Anordnen des Faltteils benachbart zur Einmündung des Rohrs derart, dass die Abschnitte sich von dort weg erstrecken, wobei die Streifen des unteren Abschnitts einen Kanal zum Führen des oberen Abschnitts bilden, und Bewegen des Faltteils entlang der Auskleidung zur Vergrößerung der Länge des unteren Abschnitts und Verringerung der Länge des oberen Abschnitts, so dass der obere Abschnitt in das Rohr durch Gleitverschieben in dem Kanal gezogen wird.

2. verfahren nach Anspruch 1, wobei die Auskleidung in drei Längsstreifen gefaltet wird, welche den Kanal bilden, der eine Basis und zwei Seitenabschnitte umfasst.

3. Verfahren nach Anspruch 2, wobei die Streifen des oberen Abschnitts allgemein in Bezug aufeinander parallel in einem Querabschnitt der Auskleidung angeordnet sind.

4. Verfahren nach einem der Ansprüche 1 bis 3, wobei das Falten der Auskleidung in obere und untere Abschnitte um eine Rolle erfolgt, die für eine Drehung in Lagern angebracht ist, die in die Leitung bewegt werden, um das Faltteil in das Rohr zu bewegen.

5. Verfahren nach einem der vorangehenden Ansprüche, aufweiscnd das Bewegen des Faltteils in das Rohr, bis die Länge des oberen Abschnitts sich auf Null verringert, und AusbreiLen der Auskleidung in Kontakt mit den Wänden des Rohrs, um für dieses eine Auskleidung zu bilden.

## Revendications

1. Procédé pour insérer un revêtement tubulaire flexible dans une conduite comprenant l'aplanissement du revêtement et le pliage du revêtement aplani premièrement dans une pluralité de bandes longitudinales et le pliage du revêtement deuxièmement dans des parties supérieure et inférieure, le placement du pli adjacent à la bouche de la conduite avec les parties s'éloignant à partir de celle-ci, les bandes de la partie inférieure formant un canal pour guider la partie supérieure et pour déplacer le pli le long du revêtement afin d'augmenter la longueur de la partie inférieure et de diminuer la longueur de la partie supérieure de sorte que la partie supérieure soit tirée dans la conduite en glissant dans ledit canal.

2. Procédé selon la revendication 1 dans lequel le revêtement est plié en trois bandes longitudinales qui forment ledit canal qui comprend une base et deux parties latérales.

3. Procédé selon la revendication 2 dans lequel les bandes de la partie supérieure sont disposées généralement mutuellement en parallèle dans une section transversale du revêtement.

4. Procédé selon l'une quelconque des revendications 1 à 3 dans lequel le pliage du revêtement dans des parties supérieure et inférieure est disposé autour d'un rouleau monté pour une rotation sur des roulements qui sont déplacés dans la conduite afin de déplacer le pli dans la conduite.

5. Procédé selon l'une quelconque des revendications précédentes comprenant le déplacement du pli dans la conduite jusqu'à ce que la longueur de la partie supérieure soit réduite à zéro et le déploiement du revêtement en contact avec les parois de la conduite pour former un revêtement intérieur pour celles-ci.
